# EUROPÄISCHE PATENTSCHRIFT

(11) **EP 2 303 664 B1**
(45) Veröffentlichungstag und Bekanntmachung des Hinweises auf die Patenterteilung: **27.02.2013**
(21) Anmeldenummer: 09761458.0
(22) Anmeldetag: 09.06.2009
(51) Int. Cl.: B60W 30/16, B60W 30/12, B60W 50/08, B60W 30/14

(54) **FAHRERASSISTENZSYSTEM UND DESSEN BEDIENKONZEPT**
DRIVER ASSISTANCE SYSTEM AND OPERATOR CONTROL CONCEPT THEREFOR
SYSTEME D'ASSISTANCE A LA CONDUITE ET SON PRINCIPE DE COMMANDE

(30) Priorität: 11.06.2008 DE 102008027737; 15.04.2009 DE 102009017154
(43) Veröffentlichungstag der Anmeldung: 06.04.2011
(73) Patentinhaber: Volkswagen Aktiengesellschaft, 38440 Wolfsburg (DE)
(72) Erfinder: GIEBEL, Tobias, 38436 Wolfsburg (DE); EIGEL, Thomas, 10627 Berlin (DE); JERHOT, Jiri, 38106 Braunschweig (DE); SEMMLER, Carsten, 38162 Cremlingen (DE)
(74) Vertreter: Meyer, Enno
(86) Internationale Anmeldenummer: PCT/EP2009/004139
(87) Internationale Veröffentlichungsnummer: WO 2009/149895

(56) Entgegenhaltungen:
- EP-A- 1 356 979
- WO-A-03/058359
- DE-A1-102004 009 308
- GB-A- 2 403 027

## Beschreibung

Die Erfindung betrifft ein Verfahren zum Betreiben eines Fahrerassistenzsystems, d.h. ein Bedienkonzept, gemäß dem Oberbegriff des Anspruchs 1.

In den letzten Jahren wurden verstärkt Fahrerassistenzsysteme einer breiten Nutzerschicht zugänglich gemacht. Diese Systeme unterstützen den Fahrer bei der Aufgabe der Fahrzeugführung und sollen im Wesentlichen den Komfort und die Sicherheit im Straßenverkehr verbessern. Durch die Entwicklung leistungsfähiger und zugleich kostengünstiger Sensoren konnte der Einsatzbereich der Fahrerassistenzsysteme erweitert werden. Üblicherweise erfolgt dabei eine Unterteilung in Längsführungs- und Querführungssysteme.

Das Fahrerassistenzsystem Adaptive-Cruise-Control (ACC) unterstützt den Fahrer bei der Aufgabe der Fahrzeuglängsführung. Ursprünglich sind derartige Systeme für den Einsatz auf Autobahnen und gut ausgebauten Landstraßen mit hohem Geschwindigkeitspotential entwickelt worden. Der Einsatzbereich moderner ACC-Systeme konnte auch auf den niederen Geschwindigkeitsbereich und auf Folgefahrten bis hin zum Stillstand erweitert werden.

Vergleichbar zur Längsführungsunterstützung kann der Fahrer auch bei der Aufgabe der Querführung durch ein Assistenzsystem unterstützt werden. Wird der befahrbare Bereich durch eine geeignete Sensorik erkannt, kann die Unterstützung in mehreren Stufen erfolgen. Die Funktionalität bereits verfügbarer Systeme reicht dabei von einfachen Hinweisen (Lane Departure Warning, LDW) bis hin zu unterstützenden Lenkeingriffen in Situationen, in denen ein Verlassen des Fahrstreifens bevorsteht (z. B. "Lane Assist" im VW Passat CC). Diese Assistenzsysteme orientieren sich an den Fahrstreifenmarkierungen, die meist über monokulare Videosensorik erfasst werden.

Aus der Druckschrift DE 103 43 178 A1 ist ein Fahrerassistenzsystem für Kraftfahrzeuge bekannt, das eine Sensoreinrichtung zur Erfassung des Verkehrsumfelds und einen Regler zur Regelung der Beschleunigung des Kraftfahrzeugs gemäß einer vorbestimmten Längsführungsstrategie aufweist, wobei ein Strategiemodul die anzuwendende Längsführungsstrategie variabel bestimmt. Dabei kann der Fahrer mit Hilfe einer Eingabeeinrichtung zwischen einer Anzahl von vorgegebenen Längsführungsstrategien, beispielsweise komfortbetont, normal oder dynamisch, wählen und das Systemverhalten des Fahrerassistenzsystems entsprechend seinen Bedürfnissen anpassen.

Bei den bekannten Fahrerassistenzsystemen kann zwar der Fahrer gegebenenfalls die Strategie der Längsführung wählen, aber der Funktionsumfang des Fahrerassistenzsystems ist üblicherweise im wesentlichen vorgegeben. Allerdings kann der Fahrer aufgrund der Vielzahl der in einem Fahrzeug verfügbarer Fahrerassistenzfunktionen die Übersicht über den Funktionsumfang des Fahrerassistenzsystems verlieren.

Druckschrift EP 1 356 979 A2 beschreibt ein Fahrerassistenzsystem für Kraftfahrzeuge mit mehreren Teilfunktionen, die den Fahrer bei der Fahrzeugführung unterstützen, wobei Teilfunktionen einzeln zu- oder abschaltbar sind. Insbesondere können mehrere vordefinierte Betriebsmodi, die sich in der Auswahl der aktiven Teilfunktionen unterscheiden in einer nach Funktionsumfang halbgeordneten Reihe angeordnet sein, wobei die verschiedenen Betriebsmodi der Reihe nach durchgeschaltet werden können.

Der Erfindung liegt daher die Aufgabe zugrunde, ein Bedienkonzept für ein Fahrerassistenzsystem zu schaffen, was für den Fahrer die notwenige Transparenz sicher stellt.

Diese Aufgabe wird durch ein Verfahren zum Bedienen eines Fahrerassistenzsystems mit den Merkmalen des Anspruchs 1 gelöst. Bevorzugte Ausführungsformen der Erfindung sind Gegenstand der Unteransprüche.

Das erfindungsgemäße Verfahen zum Betreiben eines Fahrerassistenzsystems mit einer vorgegebenen Anzahl von Fahrerassistenzfunktionen, wobei das Fahrerassistenzsystem eine Einrichtung zur Definition, Speicherung und Ausführung einer vorgegebenen Anzahl von Fahrerassistenzpaketen aufweist, so dass jedes Fahrerassistenzpaket eine oder mehrere Fahrerassistenzfunktion umfasst und jedes Fahrerassistenzpaket einen vorbestimmten Funktionsumfang aufweist, wobei eines der Fahrassistenzpakete des Fahrerassistenzsystems aktiviert ist, weist die folgenden Schritte auf:
- Feststellen der zukünftigen Nichtverfügbarkeit des aktuellen Fahrerassistenzpakets,
- Deaktivieren aller Fahrerassistenzfunktionen des aktuellen Fahrerassistenzpakets
- Übernahme der Fahrfunktion durch den Fahrer,
- Systemanalyse durch das Fahrerassistenzsystem,
- Anbieten eines alternativen Fahrerassistenzpakets oder mehrerer alternativen Fahrerassistenzpakete an den Fahrer, und
- Übernahme des einen angebotenen Fahrerassistenzpakets durch den Fahrer oder Auswählen eines der angebotenen Fahrerassistenzpakete durch den Fahrer.

Vorzugsweise unterbreitet das Fahrerassistenzsystem im Fall einer Ablehnung des einen angebotenen Fahrerassistenzpakets durch den Fahrer diesem einen weiteren Vorschlag eines alternativen Fahrerassistenzpakets.

Insbesondere kann das Fahrerassistenzsystem das alternative Fahrerassistenzpaket anhand des Funktionsumfang auswählen, wobei entweder der größtmögliche momentan mögliche Funktionsumfang oder ein der Verkehrssituation angepasster momentan möglicher Funktionsumfang ausgewählt werden kann.

In einer weiteren bevorzugten Ausführungsform werden die Fahrerassistenzpakete mit aktuell verfügbarem Funktionsumfang dem Fahrer als alternative Fahrerassistenzpakete angeboten, wobei dann der Fahrer über eine Eingabeeinrichtung das von ihm bevorzugte Assistenzpaket auswählen kann..

Vorzugsweise sind die Funktionsumfänge der Fahrerassistenzpakete so aufeinander abgestimmt, dass es ein Fahrerassistenzpaket mit einem geringsten Funktionsumfang und ein Fahrerassistenzpaket mit einem maximalen Funktionsumfang gibt.

Weiter bevorzugt wird, dass die Funktionsumfänge der Assistenzpakete so aufeinander aufbauen, dass ein Assistenzpaket mit einem größeren Funktionsumfang die Assistenzpakete geringeren Umfangs zumindest teilweise umfasst. Mit anderen Worten, man könnte von einer hierarchischen Ordnung der Pakete sprechen, d.h. die Pakete bilden von ihrem Umfang her betrachtet eine Folge i = 1 bis n, wobei der Funktionsumfang des i-ten Pakets Bestandteil des Funktionsumfangs des (i+1)-ten Pakets ist. Es sind jedoch auch andere Ausprägungen der Pakete möglich, wobei sich die Pakete über den Kontext definieren würden, also beispielsweise nach Straßentyp, Geschwindigkeit und/oder Verkehrsdichte.

Vorzugsweise werden die Fahrerassistenzpakete über die verwendete Umfelderkennung definiert. Dies bedeutet, dass das Paket mit dem geringsten Funktionsumfang beispielsweise keine Umfelderkennung, das nächsthöhere Paket über eine Umfelderkennung mittels Ultraschall, das nächste Paket über eine Umfelderkennung mittels Ultraschall und Radar, und das höchste Paket über eine Umfelderkennung mittels Ultraschall, Radar und Kamera verfügt.

Weiter bevorzugt werden die Fahrerassistenzpakete über den Unterstützungsgrad definiert, d.h. wie weit das Assistenzpaket den Fahrer unterstützt und in das Fahrgeschehen eingreift.

In einer weiteren bevorzugten Ausführungsform kann der Fahrer die Fahrerassistenzfunktionen jedes Fahrerassistenzpakets mit Hilfe eines Menüs selbst bestimmen und so die einzelnen Pakete zusammensetzen. Dies setzt allerdings im Prinzip einen versierten Fahrer voraus.

Bevorzugte Ausführungsformen der Erfindung werden nachfolgend anhand von Beispielen erläutert.

Ausgangspunkt der Erfindung sind Fahrerassistenzsysteme (FAS) und automatische Fahrfunktionen, d.h. im Grenzfall kann es sich auch um Systeme zur automatischen Fahrzeugführung ohne aktive Fahrerbeteiligung handeln.

Ein wesentliche Grundidee ist, wie bereits oben erwähnt, dass die Vielzahl aller möglichen Assistenzsysteme in geeigneter Weise in Pakete zusammengefasst werden, die einen gewissen Level des Unterstützungsgrad und gewisse Systemgrenzen (z.B. Anforderungen an die Vorausschauweite der Umfelderfassung) aufweisen. Die FAS-Pakete können vordefiniert sein und je nach Ausprägung können die angebotenen Pakete und/oder das Portfolio der möglichen enthaltenen FAS-Funktionen in jedem Paket mit Hilfe eines Menüs festgelegt werden (z.B. im Stand über die MFA).

Beispielsweise können die folgenden Pakete für die Längsregelung definiert worden sein:
- Paket 1:: GRA (Geschwindigkeitsregelanlage, keine Umfelderkennung notwendig),
- Paket 2:: ACC Stopp und Go (Umfelderkennung via Ultraschall),
- Paket 3:: ACC ab 30km/h ohne intelligente Geschwindigkeitsanpassung (Umfelderkennung via Radar), und
- Paket 4:: ACC ab 30km/h mit intelligenter Geschwindigkeitsanpassung an z.B. Kurvenradius und Tempolimits (Umfelderkennung via Radar und Kamera).

In jedem Paket können unterschiedliche Beeinflussungsmuster vorliegen, die zu unterschiedlichen Verhaltensweisen der Grundfunktion führen können. So ist in Paket 3 beispielsweise die Geschwindigkeitsanpassung in Kurven nicht umgesetzt.

Das erfindungsgemäße Bedienkonzept bzw. Verfahren zum Betrieb des Fahrerassistenzsystems, umfasst in diesem Beispiel die im Folgenden beschriebene Abfolge, wobei Ausgangspunkt der Betrachtung ist, dass ein FAS-Paket aktiviert ist und dem Fahrer bei der Fahrzeugführung assistiert. Beispielsweise kann es sich bei dem aktivierten Paket um Paket 4 handeln.
- Das System detektiert, dass der aktuelle Funktionsumfang des aktivierten FAS-Pakets in Kürze nicht mehr angeboten werden kann, weil beispielsweise einige Fahrerassistenzfunktionen nicht mehr verfügbar sind, da die Systemgrenzen der einzelnen Funktion überschritten wurden. So kann im Beispiel die kamerabasierte Fahrspurerkennung ausgefallen sein.
- Das System leitet eine Fahrerübernahme ein, so dass alle FAS-Funktionen sicher deaktiviert werden können. Im Beispiel wird das ACC ab 30 km/h mit intelligenter Geschwindigkeitsanpassung deaktiviert.
- Der Fahrer übernimmt die Fahrfunktion und das Assistenzsystem analysiert den Systemstatus .
- Dem Fahrer wird aus der Vielzahl der möglichen FAS-Pakete dasjenige mit dem größten oder je nach Verkehrssituation sinnvollsten Funktionsumfang angeboten, die momentan verfügbar ist. Im Beispiel wird ihm Paket 3 angeboten, da "ACC ab 30 km/h ohne intelligente Geschwindigkeitsanpassung" auch ohne Fahrspur- und Tempolimit-Information möglich ist.
- Der Fahrer bestätigt via SET-Taste den angebotenen Funktionsumfang bzw. das Paket und die FAS-Funktionen werden aktiviert. Im Beispiel bestätigt er "ACC ab 30 km/h ohne intelligente Geschwindigkeitsanpassung " und führt die Fahrt fort.
- Das System detektiert, dass auch der neue aktuelle Funktionsumfang des aktuellen FAS-Pakets in Kürze nicht mehr angeboten werden kann, da das Bremsensteuergerät eine Fehlfunktion meldet.
- Das System leitet eine Fahrerübernahme ein, so dass alle FAS-Funktionen sicher deaktiviert werden können. Im Beispiel wird das ACC ab 30 km/h ohne intelligente Geschwindigkeitsanpassung deaktiviert.
- Der Fahrer übernimmt die Fahrfunktion und das Assistenzsystem analysiert den Systemstatus.
- Dem Fahrer wird aus der Vielzahl der FAS-Pakete dasjenige mit dem größten oder je nach Verkehrssituation sinnvollsten Funktionsumfang angeboten, das momentan verfügbar ist. Im Beispiel wird ihm Paket 1 angeboten, da "GRA" auch ohne Umfelderkennung und Bremseingriff möglich ist.
- Der Fahrer bestätigt via SET-Taste den angebotenen Funktionsumfang bzw. das Paket und die FAS-Funktionen werden aktiviert. Im Beispiel bestätigt er "GRA" und führt die Fahrt fort.

Lehnt der Fahrer ein Assistenzangebot ab und ist somit keine Assistenz aktiv, so kann er jederzeit durch einmaliges Drücken der SET-Taste ein aktuelles Angebot anfordern und ggf. durch nochmaliges Drücken der SET-Taste auswählen. Bei aktivierter Assistenz wird ihm nach Drücken der SET-Taste diese angezeigt.

Das Angebot für die jeweilige Assistenz kann visuell oder akustisch per Sprachausgabe erfolgen. Die Auswahl und Bestätigung seitens des Fahrers kann über konventionelle Bedienelemente wie Schalter, Taster, Touchscreen oder per Sprachdialog erfolgen.

Eine alternative Ausprägung wäre das Angebot aller möglichen Assistenzpakete, die im jeweiligen Kontext, d.h. Straßentyp, Geschwindigkeit, Verkehrsdichte, möglich sind. Aus diesen könnte der Fahrer dann über entsprechende Bedienelemente eine Option auswählen und aktivieren.

## Patentansprüche

1. Verfahren zur Bedienung eines Fahrerassistenzsystems mit einer vorgegebenen Anzahl von Fahrerassistenzfunktionen, welches eine Einrichtung zur Definition, Speicherung und Ausführung einer vorgegebenen Anzahl von Fahrerassistenzpaketen aufweist, wobei jedes Fahrerassistenzpaket eine oder mehrere Fahrerassistenzfunktion umfasst und jedes Fahrerassistenzpaket einen vorbestimmten Funktionsumfang aufweist, und wobei ein Fahrassistenzpaket aktiviert ist,
**gekennzeichnet durch** die Schritte:
Feststellen der zukünftigen Nichtverfügbarkeit des aktuellen Fahrerassistenzpakets, Deaktivieren aller Fahrerassistenzfunktionen des aktuellen Fahrerassistenzpakets Übernahme der Fahrfunktion **durch** den Fahrer,
Systemanalyse **durch** das Fahrerassistenzsystem,
Anbieten eines alternativen Fahrerassistenzpakets oder mehrerer alternativen Fahrerassistenzpakete an den Fahrer, und
Übernahme des einen angebotenen Fahrerassistenzpakets **durch** den Fahrer oder Auswählen eines der angebotenen Fahrerassistenzpakete **durch** den Fahrer.

2. Verfahren nach Anspruch 1, **dadurch gekennzeichnet, dass** das Fahrerassistenzsystem im Fall einer Ablehnung des einen angebotenen Fahrerassistenzpakets durch den Fahrer diesem einen weiteren Vorschlag eines alternativen Fahrerassistenzpakets unterbreitet.

3. Verfahren nach einem der Ansprüche 1 oder 2, **dadurch gekennzeichnet, dass** das Fahrerassistenzsystem das eine alternative Fahrerassistenzpaket anhand des Funktionsumfang auswählt, wobei entweder der größtmögliche momentan mögliche Funktionsumfang oder ein der Verkehrssituation angepasster momentan möglicher Funktionsumfang ausgewählt wird.

4. Verfahren nach einem der Ansprüche 1 oder 2, **dadurch gekennzeichnet, dass** die Fahrerassistenzpakete mit aktuell verfügbarem Funktionsumfang dem Fahrer als alternative Fahrerassistenzpakete angeboten werden.

5. Verfahren nach einem der vorangegangenen Ansprüche, **dadurch gekennzeichnet, dass** die Funktionsumfänge der Fahrerassistenzpakete so aufeinander abgestimmt sind, dass es ein Fahrerassistenzpaket mit einem geringsten Funktionsumfang und ein Fahrerassistenzpaket mit einem maximalen Funktionsumfang gibt.

6. Verfahren nach einem der vorangegangenen Ansprüche, **dadurch gekennzeichnet, dass** die Funktionsumfänge der Assistenzpakete aufeinander aufbauen, so dass ein Assistenzpaket mit einem größeren Funktionsumfang die Assistenzpakete mit geringerem Umfang zumindest teilweise umfasst.

7. Verfahren nach Anspruch 5 oder 6, **dadurch gekennzeichnet, dass** die Fahrerassistenzpakete über die verwendete Umfelderkennung definiert werden.

8. Verfahren nach einem der Ansprüche 5 bis 7, **dadurch gekennzeichnet, dass** die Fahrerassistenzpakete über den Unterstützungsgrad definiert werden.

9. Fahrerassistenzsystem nach einem der Ansprüche 5 bis 8, **dadurch gekennzeichnet, dass** die Fahrerassistenzfunktionen jedes Fahrerassistenzpakets mit Hilfe eines Menüs bestimmt werden.

## Claims

1. operator control method for a driver assistance system having a predefined number of driver assistance functions, which method has a device for defining, storing and carrying out a predefined number of driver assistance packages, wherein each driver assistance package comprises one or more driver assistance functions, and each driver assistance package has a predetermined functional scope, and wherein a driver assistance package is activated,
**characterized by** the steps:
detection of the future non-availability of the current driver assistance package,
deactivation of all the driver assistance functions of the current driver assistance package,
transfer of the driving function by the driver,
system analysis by the driver assistance system,
providing an alternative driver assistance package or a plurality of alternative driver assistance packages to the driver, and
transfer of the one offered driver assistance package by the driver or
selection of one of the offered driver assistance packages by the driver.

2. Method according to Claim 1, **characterized in that** in the case of rejection of the one offered driver assistance package by the driver, the driver assistance system submits to the driver a further proposal of an alternative driver assistance package.

3. Method according to one of Claims 1 or 2, **characterized in that** the driver assistance system selects the one alternative driver assistance package on the basis of the functional scope, wherein either the largest possible instantaneously possible functional scope or an instantaneously possible functional scope which is adapted to the traffic situation is selected.

4. Method according to one of Claims 1 or 2, **characterized in that** the driver assistance packages with a currently available functional scope are offered to the driver as alternative driver assistance packages.

5. Method according to one of the preceding claims, **characterized in that** the functional scopes of the driver assistance packages are matched to one another in such a way that there is a driver assistance package with a minimum functional scope and a driver assistance package with a maximum functional scope.

6. Method according to one of the preceding claims, **characterized in that** the functional scopes of the assistance packages are based on one another in such a way that an assistance package with a relatively large functional scope at least partially comprises the assistance packages with relatively small scope.

7. Method according to Claim 5 or 6, **characterized in that** the driver assistance packages are defined by means of the environment detection used.

8. Method according to one of Claims 5 to 7, **characterized in that** the driver assistance packages are defined by means of the degree of assistance.

9. Driver assistance system according to one of Claims 5 to 8, **characterized in that** the driver assistance functions of each driver assistance package are determined using a menu.

## Revendications

1. Procédé d'utilisation d'un système d'assistance au conducteur doté d'un nombre prédéfini de fonctions d'assistance au conducteur, lequel présente un dispositif de définition, de mise en mémoire et d'exécution d'un nombre prédéfini de blocs d'assistance au conducteur, chaque bloc d'assistance au conducteur comprenant une ou plusieurs fonctions d'assistance au conducteur et chaque bloc d'assistance au conducteur présentant une étendue fonctionnelle prédéfinie, et un bloc d'assistance à la conduite étant activé, **caractérisé par** les étapes suivantes :
détermination de la future non-disponibilité du bloc d'assistance au conducteur actuel,
désactivation de toutes les fonctions d'assistance au conducteur du bloc d'assistance au conducteur actuel,
prise en charge de la fonction de conduite par le conducteur,
analyse du système par le système d'assistance au conducteur,
proposition au conducteur d'un bloc d'assistance au conducteur alternatif ou de plusieurs blocs d'assistance au conducteur alternatifs, et
validation par le conducteur de l'un des blocs d'assistance au conducteur proposés ou sélection par le conducteur de l'un des blocs d'assistance au conducteur proposés.

2. Procédé selon la revendication 1, **caractérisé en ce que** le système d'assistance au conducteur, dans le cas d'un refus par le conducteur de l'un des blocs d'assistance au conducteur proposés, soumet à celui-ci une proposition supplémentaire d'un bloc d'assistance au conducteur alternatif.

3. Procédé selon la revendication 1 ou 2, **caractérisé en ce que** le système d'assistance au conducteur sélectionne le bloc d'assistance au conducteur alternatif à l'aide de l'étendue fonctionnelle, en sélectionnant soit la plus grande étendue fonctionnelle possible momentanément possible, soit une étendue fonctionnelle momentanément possible adaptée à la situation de trafic.

4. Procédé selon la revendication 1 ou 2, **caractérisé en ce que** les blocs d'assistance au conducteur disposant de l'étendue fonctionnelle actuellement disponible sont proposés au conducteur en tant que blocs d'assistance au conducteur alternatifs.

5. Procédé selon l'une des revendications précédentes, **caractérisé en ce que** les étendues fonctionnelles des blocs d'assistance au conducteur sont accordées les unes aux autres de telle sorte qu'il existe un bloc d'assistance au conducteur ayant une étendue fonctionnelle minimale et un bloc d'assistance au conducteur ayant une étendue fonctionnelle maximale.

6. Procédé selon l'une des revendications précédentes, **caractérisé en ce que** les étendues fonctionnelles des blocs d'assistance sont construites les unes sur les autres, de sorte qu'un bloc d'assistance qui présente une étendue fonctionnelle plus grande englobe au moins partiellement les blocs d'assistance qui présentent une étendue plus faible.

7. Procédé selon la revendication 5 ou 6, **caractérisé en ce que** les blocs d'assistance au conducteur sont définis par le biais de la détection d'environnement utilisée.

8. Procédé selon l'une des revendications 5 à 7, **caractérisé en ce que** les blocs d'assistance au conducteur sont définis par le biais du degré d'assistance.

9. Procédé selon l'une des revendications 5 à 8, **caractérisé en ce que** les fonctions d'assistance au conducteur de chaque bloc d'assistance au conducteur sont déterminées à l'aide d'un menu.
